# EUROPÄISCHE PATENTSCHRIFT

(11) **EP 1 225 068 B1**
(45) Veröffentlichungstag und Bekanntmachung des Hinweises auf die Patenterteilung: **09.02.2005**
(21) Anmeldenummer: 01128961.8
(22) Anmeldetag: 06.12.2001
(51) Int. Cl.: B60D 1/54, B60D 1/06, B60D 1/62

(54) **Anhängerkupplung mit Anhängererkennung**
Trailer coupling with trailer detection
Attelage de remorque avec détection de remorque

(30) Priorität: 23.01.2001 DE 10104180
(43) Veröffentlichungstag der Anmeldung: 24.07.2002
(73) Patentinhaber: FAC Frank Abels Consulting & Technology GmbH, 29633 Munster (DE)
(72) Erfinder: Abels, Frank, 29633 Munster (DE); Berger, Stephan, 21423 Winsen/Luhe (DE)
(74) Vertreter: Reimold, Otto, Dipl.-Phys.Dr.

(56) Entgegenhaltungen:
- EP-A- 1 024 036
- EP-A- 1 160 105
- WO-A-97/36760

## Beschreibung

Die Erfindung betrifft eine Anhängerkupplung mit einer Zugpartie zum Ankuppeln eines Anhängers an ein Zugfahrzeug und mit mindestens einem Antriebsmotor zum Bewegen der Zugpartie zwischen einer Ruhestellung und einer Gebrauchsstellung.

Bei der Zugpartie handelt es sich beispielsweise um einen auf einem Kupplungshals angeordneten Kupplungskopf, der in Gebrauchsstellung hinter das Zugfahrzeug zum Anhänger hin vorsteht, so dass dieser angekuppelt werden kann. In der Ruhestellung befindet sich die Zugpartie z.B. unterhalb und/oder vor einem zugfahrzeugseitigen Stoßfänger, so dass sie bei Nicht-Gebrauch optisch nicht störend ist. Die Bedienung gestaltet sich sehr einfach, weil lediglich ein Schalter zum Schalten des Antriebsmotors betätigt werden muss. Eine solche Anhängerkupplung ist beispielsweise aus der WO 97/36760 bekannt.

Allerdings gehen vom motorischen Bewegen der Zugpartie Sicherheitsrisiken aus. Beispielsweise muss die Zugpartie im Fahrbetrieb mit einem an das Zugfahrzeug angekuppelten Anhänger in Gebrauchsstellung bleiben.

Dazu wird in der WO 97/36760 vorgeschlagen, dass eine Steuerung zum Betreiben des Antriebs vorgesehen ist, welche entweder ein Bewegen der Zugpartie oder ein Fahren des Zugfahrzeugs zulässt. Ein solches Bedienkonzept kennt man beispielsweise auch bei motorisch betriebenen Cabrio-Verdecken, die nur bei Fahrzeug-Stillstand betätigbar sind.

Eine Steuerung gemäß WO 97/36760 muss mit der Motorsteuerung des Zugfahrzeugs zusammenwirken, in einem einfachen Fall beispielsweise mit dessen Motor-Zündung. Jedenfalls ist die Lösung aufwändig. Zudem besteht kein unmittelbarer Zusammenhang zwischen Fahrbetrieb des Zugfahrzeugs und angekuppeltem Anhänger, denn bei nicht angekuppeltem Anhänger spricht im Allgemeinen nichts gegen eine Betätigung der Zugpartie, selbst wenn das Zugfahrzeug fährt. Andererseits können das Zugfahrzeug und/oder der Anhänger auch bei stehendem Zugfahrzeug durch ein Bewegen der Zugpartie mit angekuppeltem Anhänger beschädigt werden.

Aus der nicht vorveröffentlichten Europäischen Patentanmeldung EP 1 160 104 ist eine Anhängerkupplung der eingangs genannten Art bekannt, bei der beispielsweise ein Tastschalter erfasst, ob ein elektrischer Versorgerkontakt der Anhängerkupplung durch den Anhänger genutzt wird. Wenn der Versorgerkontakt genutzt ist, bleibt eine Fixierung der Zugpartie bestehen, so dass der Antriebsmotor die Zugpartie nicht in Richtung der Ruhestellung verstellen kann.

Es ist die Aufgabe der Erfindung, eine Anhängerkupplung der eingangs genannten Art derart weiterzubilden, dass bei angekuppeltem Anhänger eine Bewegung der Zugpartie in Richtung der Ruhestellung zuverlässig verhinderbar ist.

Zur Lösung der Aufgabe ist eine Anhängerkupplung gemäß der technischen Lehre des Anspruchs 1 vorgesehen.

Der Erfindung liegt dabei der Gedanke zugrunde, dass ein angekuppelter Anhänger vom Zugfahrzeug elektrisch versorgt werden muss, so dass beispielsweise Leuchtmittel des Anhängers, also Bremsleuchten, Blinklichter, Rückleuchten etc., vom Zugfahrzeug aus ansteuerbar sind. Dazu ist eine elektrische Verbindung zwischen Zugfahrzeug und Anhänger notwendig, bei der ein zugfahrzeugseitiger elektrischer Versorgerkontakt, der im Allgemeinen als eine Steckbuchse ausgeführt ist, durch den Anhänger genutzt wird. Aus der Nutzung des Versorgerkontakts wird eine Nutzung der Zugpartie hergeleitet, bei der eine Ansteuerung des Antriebsmotors oder der Antriebsmotoren zu einer Bewegung der Zugpartie in Richtung der Ruhestellung verhindert wird. Dazu unterbrechen die Sperrmittel beispielsweise elektrisch eine Steuerleitung, mit der der Antriebsmotor oder die Antriebsmotoren zu einer Bewegung der Zugpartie in die Ruhestellung angesteuert werden können.

Die Zugpartie wird nicht nur im Fahrbetrieb des Zugfahrzeugs in der Gebrauchsstellung gehalten, sondern auch bei Stillstand des Zugfahrzeugs, solange der Anhänger an das Zugfahrzeug angekuppelt ist. Somit werden Beschädigungen durch eine unsachgemäße Bedienung der Anhängerkupplung vermieden. Zudem ist ein Eingriff in die Motorsteuerung des Zugfahrzeugs nicht notwendig, was aus fertigungstechnischen Gründen vorteilhaft ist.

Weitere vorteilhafte Ausgestaltungen der Erfindung finden sich in den abhängigen Ansprüchen sowie in der Beschreibung.

Eine Nutzung des zugfahrzeugseitigen elektrischen Versorgerkontakts kann auf vielfältige Weise ermittelt werden. Dabei ist zum einen eine sensorlose Erfassung zweckmäßig, bei der die durch das elektrische Anschließen des Anhängers veränderten elektrischen Verhältnisse analysiert werden. Zum anderen kann vorteilhaft auch mittels einer Sensoranordnung und/oder einer Schalteranordnung erfasst werden, ob der elektrische Versorgerkontakt durch den Anhänger genutzt wird. Prinzipiell sind auch beliebige Kombinationen dieser Varianten möglich.

Zunächst werden einige Varianten zur sensorlosen Erfassung der Nutzung des zugfahrzeugseitigen elektrischen Versorgerkontakts vorgestellt.

Zweckmäßigerweise sind die Erfassungsmittel zum Erfassen zumindest eines Zustandes mindestens eines durch den Versorgerkontakt beeinflussten Stromkreises ausgestaltet. Durch das elektrische Anschließen des Anhängers an das Zugfahrzeug ändern sich Aufbau und Wirkungsweise der Stromkreise, die z.B. zum Ein- und Ausschalten von Leuchtmitteln oder zu Überwachungszwecken dienen, sowohl auf Seiten des Zugfahrzeugs als auch auf Seiten des Anhängers. Diese Veränderung wird von den Erfassungsmitteln als Nutzung der Anhängerkupplung durch den Anhänger interpretiert.

Insbesondere durch das Anschließen des Anhängers an den elektrischen Versorgerkontakt werden einerseits Stromkreise geschlossen, beispielsweise werden für Rückleuchten vorgesehene Stromkreise des Anhängers mit dem Bordnetz des Zugfahrzeugs verbunden, und andererseits geöffnet. Beispielsweise wird eine am Heck des Zugfahrzeugs angeordnete Nebelschlussleuchte deaktiviert. Zweckmäßigerweise sind die Erfassungsmittel zum Erfassen eines Schließens und/oder eines Öffnens von mindestens einem dieser Stromkreise ausgestaltet.

Vorteilhafterweise sind die Erfassungsmittel zum Erfassen eines durch die Nutzung der Anhängerkupplung bewirkten Hinzuschaltens und/oder Abschaltens mindestens eines elektrischen Verbrauchers ausgestaltet, beispielsweise eines Leuchtmittels und/oder eines anhängerseitigen und/oder zugfahrzeugseitigen Messwiderstandes.

Wenn einer der vorgenannten, von den Erfassungsmitteln detektierten elektrischen Verbraucher gestört ist oder gar ausgefallen ist, können die Erfassungsmittel eine Nutzung des zugfahrzeugseitigen Versorgerkontakts durch den Anhänger möglicherweise nicht mehr zuverlässig ermitteln. Beispielsweise ist ein über ein Leuchtmittel des Anhängers führender Stromkreis sowohl bei Trennung des Anhängers vom zugfahrzeugseitigen Versorgerkontakt als auch beim Ausfall des Leuchtmittels nicht geschlossen. Das elektrische Verbundensein des Leuchtmittels des Anhängers mit dem Zugfahrzeug kann somit nicht mehr ohne Weiteres ermittelt werden.

Vorteilhafterweise ist daher vorgesehen, dass dem jeweiligen elektrischen Verbraucher und/oder einem diesem zugeordneten Schaltmittel Überbrückungsmittel zugeordnet sind, so dass das Hinzu- bzw. Abschalten des Verbrauchers auch dann möglich ist, wenn dieser gestört ist. Beispielsweise werden die Überbrückungsmittel durch einen zu dem jeweiligen elektrischen Verbraucher parallelgeschalteten hochohmigen Widerstand gebildet.

Die Erfassungsmittel können zum einen die ohnehin bei der Nutzung des Versorgerkontakts fließenden Ströme erfassen, beispielsweise einen zum Betreiben eines Leuchtmittels des Anhängers fließenden Strom. Zum andern können in einer vorteilhaften Variante die Erfassungsmittel auch Einspeisemittel zum Einspeisen eines Prüfstromes in einen durch den Versorgerkontakt beeinflussten Stromkreis des Zugfahrzeuges und/oder des Anhängers aufweisen.

Im Folgenden werden einige Varianten der Erfindung vorgestellt, bei denen mittels einer Sensoranordnung und/oder Schalteranordnung ermittelt wird, ob die Anhängerkupplung vom Anhänger genutzt wird:

Dazu enthalten die Erfassungsmittel zweckmäßigerweise eine an dem Versorgerkontakt angeordnete Sensoranordnung und/oder Schalteranordnung. Diese ist vorteilhaft zu einem elektro-mechanischen und/oder optischen und/oder kapazitiven und/oder induktiven Erfassen eines mit dem Versorgerkontakt verbundenen anhängerseitigen Kontaktmittels, insbesondere eines Anhänger-Steckers, und/oder einer Stellung einer Abdeckeinrichtung, insbesondere einer Schutzklappe, für den mindestens einen elektrischen Versorgerkontakt ausgestaltet.

Beispielsweise kann ein elektro-mechanischer Schalter beim Verbinden eines anhängerseitigen Kontaktmittels mit dem Versorgerkontakt betätigt werden, z.B. durch das Gehäuse und/oder einen Steckkontakt des z.B. als Stecker ausgestalteten Anhänger-Kontaktmittels, und somit den Erfassungsmitteln die Nutzung des Versorgerkontakts durch den Anhänger signalisieren. Es ist auch möglich, dass eine Abdeckeinrichtung, beispielsweise eine den zugfahrzeugseitigen Versorgerkontakt gegen Verschmutzung schützenden Abdeckklappe einen solchen elektro-mechanischen Schalter betätigt. Beispielsweise wird der Schalter betätigt, wenn die Abdeckklappe zum Einstecken eines Steckers aufgeklappt wird.

Ferner kann vorteilhaft ein induktiver Sensor, z.B. ein Reed-Kontakt, oder ein kapazitiver Sensor durch das Anhänger-Kontaktmittel oder ein an diesem vorgesehenes Betätigungsmittel, z.B. einen Magneten, auf die oben beschriebene Weise betätigt werden. Weiterhin kann auch eine den Erfassungsmitteln zugeordnete, durch das Anhänger-Kontaktmittel und/oder die Abdeckeinrichtung betätigbare Lichtschranke am zugfahrzeugseitigen Versorgerkontakt oder in dessen näherer Umgebung vorgesehen sein.

Bei den oben beschriebenen Varianten der Erfindung verhindern die Sperrmittel eine Ansteuerung des jeweiligen Antriebsmotors zu einer Bewegung der Zugpartie in Richtung der Ruhestellung. Zweckmäßigerweise wird die von den Erfassungsmitteln gemeldete Information, ob der zugfahrzeugseitige Versorgerkontakt der Anhängerkupplung durch den Anhänger genutzt wird, zusätzlich zu einer Ansteuerung des mindestens einen Antriebsmotors in umgekehrter Bewegungsrichtung, hin zur Gebrauchsstellung genutzt, so dass ein beispielsweise durch Belastung der Anhängerkupplung oder durch Vibrationen beim Fahrbetrieb des Zugfahrzeug-Anhänger-Gespannes bedingtes Verstellen der Anhängerkupplung in Richtung der Ruhestellung kompensiert wird.

Daher sind bei einer zweckmäßigen Ausgestaltung der Erfindung bei der Anhängerkupplung Steuermittel zu einer Ansteuerung des mindestens einen Antriebsmotors zu einer Bewegung der Zugpartie in Richtung der Gebrauchsstellung vorgesehen, wenn die Erfassungsmittel eine Nutzung des elektrischen Versorgerkontakts durch den Anhänger melden. Die Steuermittel können beispielsweise in einem Steuermodul enthalten sein oder durch ein solches gebildet werden, das zur Steuerung der Funktionen der Anhängerkupplung vorgesehen ist.

Die Steuermittel steuern den mindestens einen Antriebsmotor zu einer zur Gebrauchsstellung der Zugpartie gerichteten Bewegungsrichtung zum einen vorteilhafterweise dann an, wenn die Erfassungsmittel eine erstmalige Nutzung des elektrischen Versorgerkontakts durch den Anhänger melden, so dass die Zugpartie zuverlässig in die Gebrauchsstellung verfahren wird und ein sicherer Fahrbetrieb des Zugfahrzeug-Anhänger-Gespanns möglich ist.

Zum andern sind die Steuermittel zweckmäßigerweise zu einem zyklischen Einschalten des mindestens einen Antriebsmotors zu einer zur Gebrauchsstellung der Zugpartie gerichteten Bewegungsrichtung ausgestaltet, so dass auch ein sozusagen schleichendes Verstellen der Zugpartie im Fahrbetrieb wiederkehrend kompensiert wird.

Zwar kann eine erfindungsgemäße Anhängerkupplung prinzipiell mit einem beliebigen Blockiermittel gegen ein unbeabsichtigtes Verstellen der Anhängerkupplung in Richtung der Ruhestellung gesichert werden, beispielsweise durch eine die Zugpartie in Gebrauchsstellung sichernde, z.B. elektro-magnetisch betätigbare Verriegelungseinrichtung. Diese könnte auch einen Bestandteil der erfindungsgemäßen Sperrmittel bilden oder durch diese aktiviert werden, wenn die Erfassungsmittel eine Nutzung des elektrischen Versorgerkontakts durch den Anhänger melden.

Vorteilhafterweise jedoch ist ein als Blockiermittel dienendes selbsthemmendes Getriebe zum Verhindern einer Bewegung der Zugpartie in Richtung der Ruhestellung bei nicht aktiviertem Antriebsmotor vorgesehen.

Im Folgenden werden die Erfindung und ihre Vorteile anhand eines Ausführungsbeispiels erläutert. Es zeigen:
- Figur 1: schematisch eine an einem Zugfahrzeug 9 angeordnete Anhängerkupplung 10 mit Sperrmitteln 11 und Erfassungsmitteln 12, sowie einen an die Anhängerkupplung 10 angekuppelten Anhänger 13,
- Figur 2: eine Erfassungs-Baugruppe 14 der Erfassungsmittel 12 zum Erfassen einer Deaktivierung einer Nebelschlussleuchte 36 des Zugfahrzeugs 9 und
- Figur 3: eine Erfassungs-Baugruppe 8 der Erfassungsmittel 12, mit der erfasst wird, dass anhängerseitige Leuchtmittel 37, 38 an einen Versorgerkontakt 15 der Anhängerkupplung 10 angeschlossen sind.

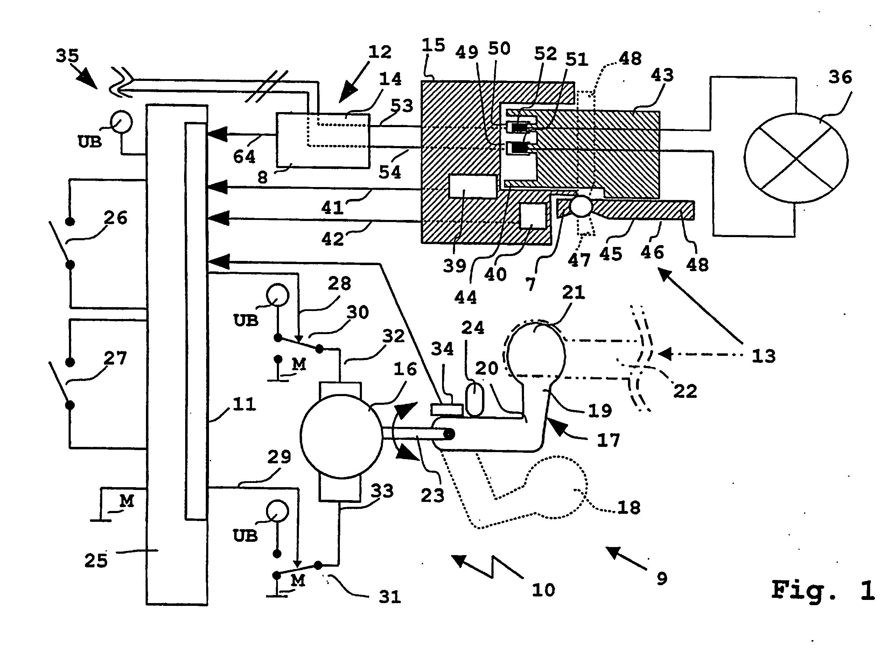

In Figur 1 ist schematisch eine Anhängerkupplung 10 zum Ankuppeln eines Anhängers 13 an ein Zugfahrzeug 9 gezeigt. Die Anhängerkupplung 10 weist einen als elektrischen Antrieb ausgebildeten Antriebsmotor 16 zum Bewegen einer Zugpartie 17 zwischen einer gestrichelt angedeuteten Ruhestellung .18 und einer Gebrauchsstellung 19 auf. Der Antriebsmotor 16 steht beispielhaft für eine beliebige Antriebsmotoranordnung mit einem oder mehreren Antriebsmotoren zum Bewegen der Zugpartie 17. In der Ruhestellung 18 befindet sich die Zugpartie 17 beispielsweise in einem Bereich unterhalb des Zugfahrzeugs 9 und/oder vor einem nicht dargestellten Stoßfänger des Zugfahrzeugs 9 oder in einer sonstigen, bei nicht angekuppeltem Anhänger 13 optisch nicht störenden Position. Die Zugpartie 17 besteht vorliegend aus einem Kupplungshals 20 und einem balligen oder kugeligen Kupplungskopf 21, auf dem im gezeigten Zustand eine Anhängepartie 22 des Anhängers 13 aufliegt.

Der Antriebsmotor 16 treibt über ein lediglich schematisch angedeutetes Getriebe 23 die Zugpartie 17 an und bewegt diese dabei zwischen der Ruhestellung 18 und der Gebrauchsstellung 19. In der Gebrauchsstellung 19 liegt die Zugpartie 17 an einem Anschlag 24 an.

Das Getriebe 23 ist vorliegend ein selbsthemmendes Getriebe, beispielsweise ein Schneckengetriebe. Das Getriebe 23 verhindert bei stromlos geschaltetem und somit nahezu kein Drehmoment auf das Getriebe 23 ausübendem Antriebsmotor 16, dass die Zugpartie 17 verstellt werden kann, beispielsweise durch die auf dieser lastende Anhängepartie 22 oder durch Vibrationen des Zugfahrzeugs 9 im Fahrbetrieb.

Der Antriebsmotor 16 wird durch eine Steuerung 25 gesteuert, die beispielsweise eine Mikroprozessorsteuerung oder eine sonstige analoge und/oder digitale Logikschaltung ist. Die Steuerung 25 kann über Schalter 26, 27 Befehle zum Bewegen der Zugpartie 17 in Ruhestellung 18 bzw. Gebrauchsstellung 19 erhalten. Über Steuerleitungen 28, 29 steuert die Steuerung 25 dann Schalter 30, 31 an, über die Versorgungsanschlüsse 32, 33 des Antriebsmotors 16 mit einer von einem Bordnetz 35 des Zugfahrzeugs 9 bereitgestellten Versorgungsspannung UB oder einem Massepotential M verbunden werden können. Durch geeignetes Schalten der Schalter 30, 31 kann die Drehrichtung des Antriebsmotors 16 und somit die Bewegungsrichtung der Zugpartie 17 beeinflusst werden. Ferner kann der Antriebsmotor 16 auf diese Weise stromlos geschaltet werden, beispielsweise wenn die Zugpartie 17 den Anschlag 24 und somit die Gebrauchsstellung 19 erreicht. Dazu ist beispielsweise ein Endschalter oder Sensor 34 an der Anhängerkupplung 10 angeordnet, der der Steuerung 25 das Erreichen der Gebrauchsstellung 19 meldet.

Die Baugruppen der mit der Versorgungsspannung UB und dem Massepotential M verbundenen Steuerung 25 sind aus Gründen der Vereinfachung nicht gezeigt. Beispielsweise kann die Steuerung 25 durch einen ASIC-Baustein (Application Specific Integrated Circuit) realisiert sein oder ein sogenanntes programmierbares logisches Feld enthalten, z.B. ein sogenanntes (Field) Programmable Logic Array ((F)PLA) oder ein sogenanntes (Field) Programmable Gate Array ((F)PGA). Die Steuerung 25 kann z.B. über einen nicht dargestellten Bus, z.B. einen CAN-Bus (CAN = Controller Area Network), an ein nicht gezeigtes Steuerungsnetz des Zugfahrzeugs 9 angeschlossen sein und auf diesem Wege Befehle erhalten, beispielsweise zum Bewegen der Zugpartie 17. Ferner kann die Steuerung 25 auch weitere Funktionen erfüllen, beispielsweise die durch den Antriebsmotor 16 fließenden Ströme überwachen und/oder elektrische Sicherheitsfunktionen leisten, z.B. eine elektrische Abschaltung von Funktionsbaugruppen bei Kurzschlüssen, Kabelbrüchen oder dergleichen durchführen.

Vorliegend ist die Steuerung 25 im Heck des Zugfahrzeugs 9 angeordnet, wobei sich die Schalter 26, 27 beispielsweise in dessen Kofferraum befinden.

Die Steuerung 25 enthält Sperrmittel 11, mit denen verhinderbar ist, dass die Zugpartie 17 bei angekuppeltem Anhänger 13 sowohl im Stillstand des Zugfahrzeugs 9 als auch bei dessen Fahrbetrieb aus der Gebrauchsstellung 19 herausbewegt wird. Die Sperrmittel 11 wirken auf die durch die Steuerung 25 bedienten Steuerleitungen 28, 29 und verhindern auf diese Weise bei angekuppeltem Anhänger 13 eine Ansteuerung des Antriebsmotors 16 zu einer Bewegung der Zugpartie 17 in Richtung der Ruhestellung 18, die beispielsweise durch eine Fehlbedienung des Schalters 27 hervorgerufen wird.

Die Sperrmittel 11 weisen beispielsweise eine nicht dargestellte Logikschaltung und/oder Unterbrechungsschalter, im einfachsten Fall z.B. in Form von Relais, auf, mit denen auf den Steuerleitungen 28, 29 gesendete, zu einer unerwünschten Ansteuerung des Antriebsmotors 16 führende Schaltbefehle blockiert werden können. Es ist möglich, dass die Sperrmittel 11 als ein in die Steuerung 25 einsetzbares Modul ausgeführt sind, z.B. in Form einer Elektronik-Platine. Die Sperrmittel 11 können auch eine Programmfunktion oder ein Programm-Modul sein, das in ein Steuerungsprogramm der in diesem Fall als Mikroprozessorsteuerung ausgestalteten Steuerung 25 eingebunden ist und das Programmcode aufweist, der durch ein Steuermittel der Steuerung 25, beispielsweise einen Mikroprozessor, ausgeführt werden kann.

Im Ausführungsbeispiel erfassen die Erfassungsmittel 12 sowohl sensorlos als auch mittels Sensoren eine Nutzung des elektrischen Versorgerkontakts 15 durch den Anhänger 13, bei der die Sperrmittel 11 eine Bewegung der Zugpartie 17 in Richtung der Ruhestellung 18 verhindern. Prinzipiell könnte jedoch auch nur eine der nachfolgend vorgestellten Varianten oder eine beliebige Kombination davon angewendet werden.

Zunächst werden mittels Sensoren funktionierende Erfassungsvarianten erläutert:

Am Versorgerkontakt 15 sind den Erfassungsmitteln 12 zugeordnete Sensoren 39, 40 angeordnet, die beispielsweise elektromechanische Schalter, induktive Sensoren, kapazitive Sensoren oder Lichtschranken sind. Die Sensoren 39, 40 melden über Meldesignale 41, 42 eine Nutzung des elektrischen Versorgerkontakts 15 durch den Anhänger 13 an die Steuerung 25 und/oder die Sperrmittel 11.

Der Sensor 39 dient zur Erfassung, ob ein ein anhängerseitiges Kontaktmittel bildender Stecker 43 in den Versorgerkontakt 15 gesteckt ist. Durch Einstecken des Steckers 43 in den Versorgerkontakt 15 wird der Sensor betätigt. Beispielsweise wird er bei einer Ausgestaltung als elektro-mechanischer Schalter durch das Gehäuse 44 des Steckers 43 und/oder durch einen nicht dargestellten Kontaktstift des Steckers 43 geschaltet und meldet das entsprechende Schaltsignal als Meldesignal 41 an die Sperrmittel 11.

Anstatt des Sensors 39 könnten beispielsweise auch elektrische Kontakte vorgesehen sein, die durch einen nicht dargestellten Kontaktstift des Steckers 43 miteinander verbunden werden. Ferner könnte der Sensor 43 auch außerhalb des Steckers 43 angeordnet sein, beispielsweise im Heckbereich des Zugfahrzeugs 9, wobei allerdings gewährleistet sein muss, dass sich der Stecker 43 im Erfassungsbereich des Sensors 43 befindet, wenn er in den Versorgerkontakt 15 gesteckt ist.

Der Sensor 40 wird durch eine Schutzklappe 45 betätigt, die beweglich an dem Versorgerkontakt 15 angelenkt ist und als eine Abdeckeinrichtung zum Schutz gegen Verschmutzung des Versorgerkontakts 15 dient. Die Schutzklappe 45 ist in der gezeigten Offenstellung 46 aufgeklappt, so dass der Stecker 43 in den Versorgerkontakt 15 eingesteckt werden kann. Bei gezogenem Stecker 43 kann die Schutzklappe 45 in eine gestrichelt eingezeichnete Schließstellung 47 zum Verschließen des Versorgerkontakts 15 geklappt werden.

Der Sensor 40 ermittelt, ob sich die Schutzklappe 45 in der Schließstellung 47 oder in der Offenstellung 46 befindet und meldet die jeweilige Stellung als Meldesignal 42 die Sperrmittel 11. Die Offenstellung 46 wird dabei als eine Nutzung des Versorgerkontakts 15 durch den Anhänger 13 gewertet, bei der die Zugpartie 17 nicht in die Ruhestellung 18 verfahren werden darf. Der Sensor 40 ermittelt beispielsweise den jeweiligen Abstand eines hinteren Bereichs 7 der Schutzklappe 45 und erfasst somit deren jeweilige Stellung. Dazu ist der Sensor beispielsweise ein induktiver oder kapazitiver Schalter oder eine Schalteranordnung mit einem induktivem und/oder kapazitiven Schalter. Durch die Stellung des hinteren Bereichs 7 der Schutzklappe 45 wird dabei das magnetische bzw. elektrische Erfassungsfeld des Sensors 40 beeinflusst.

Es ist auch möglich, dass der Sensor 40 ein Reedkontakt ist, der durch einen am hinteren Bereich 7 der Schutzklappe 45 angeordneten Schaltmagneten betätigt wird. Ferner könnte der Sensor 40 auch an anderer Stelle des Versorgerkontakts 15 angeordnet sein, beispielsweise derart, dass ein vorderer Bereich 48 der Schutzklappe 45 in deren Schließstellung 47 in seinem Erfassungsbereich liegt.

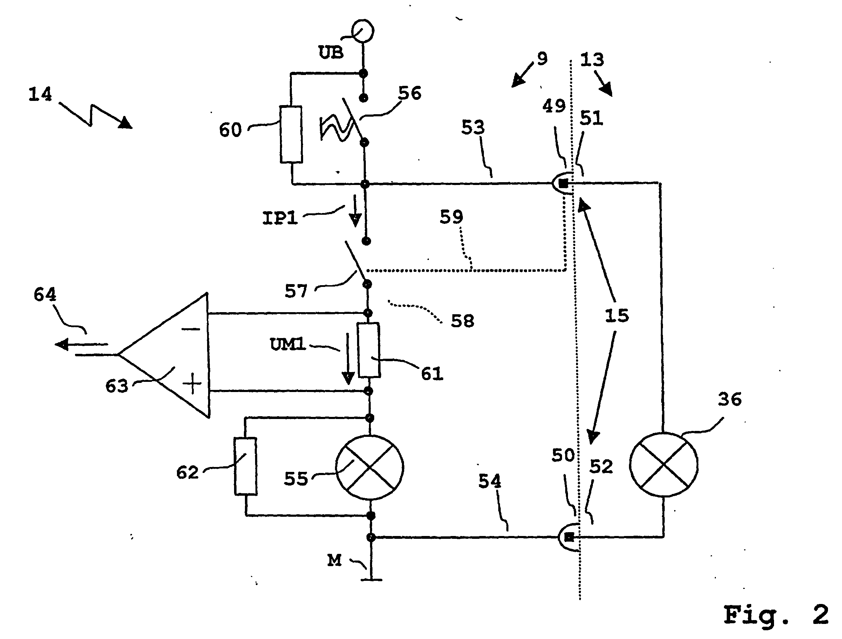

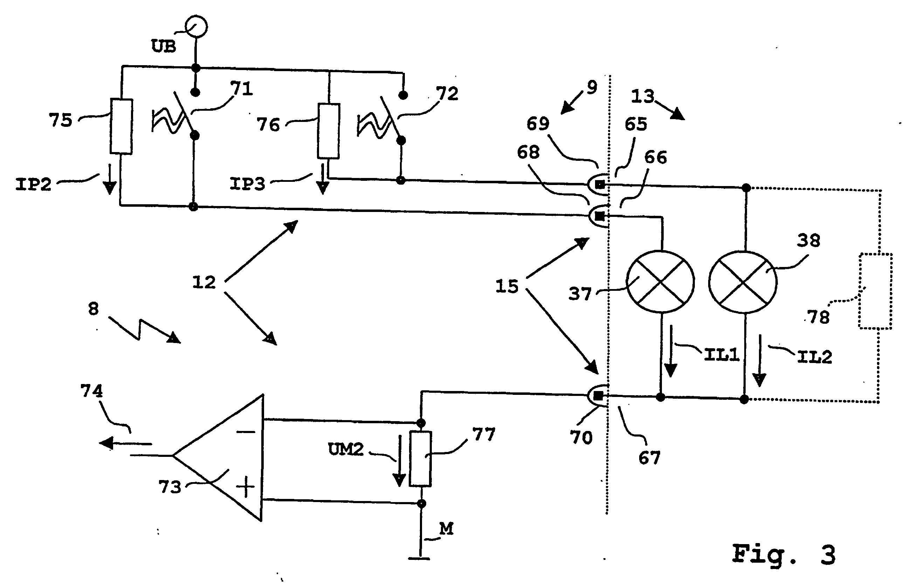

Die im Folgenden anhand der Figuren 2 und 3 beschriebenen Baugruppen 14 und 8 der Erfassungsmittel 12 sind zu einer sensorlosen Erfassung vorgesehen. Die Baugruppen 14 und 8 sind in Figur 1 lediglich angedeutet. Ferner zeigt Figur 1 auf Seiten des Zugfahrzeugs 9 und des Anhängers 13 teilweise die für das Funktionieren der Baugruppe 14 erforderlichen Bestandteile, insbesondere im Versorgerkontakt 15 angeordnete Kontaktbuchsen 49, 50, zu diesen führende Leitungen 53, 54 des zugfahrzeugseitigen Bordnetzes 35 und in diese gesteckte Kontaktstifte 51, 52 des Anhängers 13, sowie eine Nebelschlussleuchte 36 des Anhängers 13.

Bei an das Zugfahrzeug 9 angekuppeltem Anhänger 13 ist vorgesehen, dass eine am Zugfahrzeug 9 angeordnete, einen zugfahrzeugseitigen Verbraucher bildende Nebelschlussleuchte 55 deaktiviert ist, d.h. nicht mehr durch einen beispielsweise am Armaturenbrett des Zugfahrzeugs 9 angeordneten Schalter 56 eingeschaltet werden kann. Dazu ist in einen Stromkreis 58, der vom Versorgungspotential UB über den Schalter 56 und die Nebelschlussleuchte 55 zum Massepotential M führt, ein im Versorgerkontakt 15 angeordneter Öffnerkontakt 57 geschaltet, der durch Stecken des Steckers 43 in den Versorgerkontakt 15 geöffnet wird. Der Öffnerkontakt 57 ist funktional z.B. mit der Kontaktbuchse 49 gekoppelt und wird beispielsweise durch den Kontaktstift 51 betätigt, was in Figur 2 durch eine gestrichelte Linie 59 angedeutet ist.

Die Baugruppe 14 erfasst, ob die Nebelschlussleuchte 55 deaktiviert ist und wertet diesen Zustand als eine Nutzung des Versorgerkontakts 15 durch den Anhänger 13. Dazu wird überprüft, ob der Stromkreis 58 geschlossen oder geöffnet sind. Bei geschlossenem Öffnerkontakt 57 kann ein Prüfstrom IP1 über diesen fließen. Der Prüfstrom IP1 fließt dann vom Versorgungsspannungspotential UB über den Schalter 56 oder einen parallel zu diesem geschalteten Widerstand 60, den Öffnerkontakt 57, einen Messwiderstand 61 und die Nebelschlussleuchte 55 oder einen parallel zu dieser geschalteten Widerstand 62 zum Massepotential M. Am Messwiderstand 61 fällt dabei eine Messspannung UM1 ab, die von einem als Differenz- oder Messverstärker beschalteten Operationsverstärker 63 erfasst und als Meldesignal 64 an die Sperrmittel 11 gemeldet wird. Bei fließendem Prüfstrom IP1, also nicht durch den Anhänger 13 deaktivierter zugfahrzeugseitiger Nebelschlussleuchte 55, signalisiert das Meldesignal 64 den Sperrmitteln 11, dass der Versorgerkontakt 15 nicht durch den Anhänger 13 genutzt wird.

Bei geöffnetem Öffnerkontakt 57, wie in Figur 2 gezeigt, kann der Prüfstrom IP1 nicht fließen und demzufolge signalisiert das Meldesignal 64 den Sperrmitteln 11 eine Nutzung des Versorgerkontakts 15 durch den Anhänger 13.

Die dem Schalter 56 bzw. der Nebelschlussleuchte 55 parallel geschalteten Widerstände 60, 62 dienen als Überbrückungsmittel, über die der Prüfstrom IP1 fließen kann, falls der Schalter 56 geöffnet ist bzw. die Nebelschlussleuchte 55 defekt ist oder ausfällt. Die Widerstände 60, 62 weisen vorzugsweise hohe Widerstandswerte auf, so dass der Prüfstrom IP1 klein ist. Im Gegensatz dazu ist der Widerstandswert des Messwiderstands 61 zweckmäßigerweise klein, so dass die Leuchtstärke der Nebelschlussleuchte 55 kaum beeinträchtigt wird.

Die in Figur 3 gezeigte Baugruppe 8 der Erfassungsmittel 12 erfasst, ob anhängerseitige Verbraucher an den Versorgerkontakt 15 angeschlossen sind. Exemplarisch für weitere, nicht dargestellte Verbraucher der Anhängers 13, beispielsweise Leuchten, Messwiderstände, Steuergeräte oder dergleichen, sind Leuchtmittel 37, 38, z.B. Rückleuchten des Anhängers 13, über im Stecker 43 angeordnete Kontaktstifte 65, 66, 67 mit der Versorgungsspannung UB bzw. mit dem Massepotential M des Zugfahrzeugs 9 verbindbar.

Die Kontaktstifte 65, 66 und 67 sind bei in den Versorgerkontakt 15 gestecktem Stecker 43, dem gezeigten Zustand, mit im Versorgerkontakt 15 angeordneten Kontaktbuchsen 68, 69, 70 und somit mit dem Bordnetz 35 des Zugfahrzeugs 9 elektrisch verbunden, so dass die Leuchtmittel 37, 38 über beispielsweise im Armaturenbrett des Zugfahrzeugs 9 angeordnete Schalter 71, 72 ein- und ausgeschaltet werden können. Dabei fließt dann z.B. vom Versorgungspotential UB über den Schalter 71, das Leuchtmittel 37, und einen vorzugsweise niederohmigen Messwiderstand 77 ein Strom IL1 zum Massepotential M.

Am Messwiderstand 77 fällt eine Messspannung UM2 ab, die von einem als Differenzverstärker beschalteten Operatiönsverstärker 73 erfasst und als Meldesignal 74 an die Sperrmittel 11 gemeldet wird. Bei fließendem Strom IL1, also angeschlossenem und aktiviertem Leuchtmittel 37, signalisiert das Meldesignal 74 den Sperrmitteln 11, dass der Versorgerkontakt 15 durch den Anhänger 13 genutzt wird.

Bei geschlossenem Schalter 72 über das Leuchtmittel 38 fließenden Strom IL2 funktioniert der Operationsverstärker 73 sinngemäß gleich.

In Ländern, in denen beim Fahren mit einem Kraftfahrzeug stets eine Fahrzeugbeleuchtung vorgeschrieben ist und demnach die beispielsweise als Rückleuchten dienenden Leuchtmitteln 37, 38 auch bei Tageslicht betrieben werden, beispielsweise den skandinavischen Ländern, funktioniert die Baugruppe 8 in der bisher beschriebenen Ausgestaltung bereits zufriedenstellend. Allerdings sollte zweckmäßigerweise auch bei deaktivierten Leuchten 37, 38 ein zuverlässige Erfassung der Nutzung des Versorgerkontakts 15 möglich sein.

Damit der Operationsverstärker 73 auch bei geöffneten Schaltern 71, 72 zuverlässig eine Nutzung des Versorgerkontakts 15 durch den Anhänger 13 signalisieren kann, sind parallel zu den Schaltern 71, 72 als Überbrückungsmittel dienende Widerstände 75, 76 geschaltet, über die bei geöffneten Schaltern 71, 72 Prüfströme IP2, IP3 fließen können, die eine am Messwiderstand 77 als Messspannung UM2 abfallende Spannung hervorrufen.

Bei einem Defekt beider Leuchtmittel 37, 38 können die Prüfströme IP2, IP3 nicht mehr fließen, so dass eine Erfassung der Nutzung des Versorgerkontakts 15 nicht möglich ist. Werden allerdings weitere anhängerseitige Leuchtmittel sowie neben den Schaltern 71, 72 weitere, nicht dargestellte Schalter des Zugfahrzeugs 9, die Leuchtmitteln des Anhängers 13 zugeordnet sind, in der in Figur 3 gezeigten Weise beschaltet, wird eine hohe Zuverlässigkeit erzielt, da ein gleichzeitiger Ausfall aller anhängerseitigen Leuchtmittel unwahrscheinlich ist und ein derart defekter Anhänger ohnehin nicht betrieben werden darf.

Zudem kann zumindest einem anhängerseitigen Leuchtmittel, beispielsweise dem Leuchtmittel 37, ein als Überbrückungsmittel dienender, zweckmäßigerweise hochohmiger Widerstand 78 parallel geschaltet werden, über den die Prüfströme IP2, IP3 gegebenenfalls fließen können. Diese Variante ist in Figur 3 gestrichelt angedeutet. Der Widerstand 78 könnte beispielsweise in den Stecker 43 integriert sein und dort z.B. zwischen die Kontaktstifte 65 und 67 geschaltet werden.

Die Erfassungsmittel 12 senden die Meldesignale 41, 42, 64, 74 den Sperrmitteln 11 und somit der Steuerung 25, um dieser eine Nutzung des Versorgerkontakts 15 durch den Anhänger 13 zu signalisieren. Die Steuerung 25 bildet Steuermittel, die zu einem zweckmäßigerweise zyklischen Einschalten des Antriebsmotors 16 zu einer zur Gebrauchsstellung 19 der Zugpartie 17 gerichteten Bewegungsrichtung ausgestaltet sind, so dass die Zugpartie 17 bei angekuppeltem Anhänger 13 zuverlässig in die Gebrauchsstellung 19 gebracht wird und dort gehalten wird.

Dabei steuert die Steuerung 25 dann die Schalter 30, 31 in einer entsprechenden Weise an, so dass der Antriebsmotor 16 die Zugpartie 17 bis zum Anschlag 24 hin bewegt. Bei Erreichen der Gebrauchsstellung 19 sendet der Sensor 34 ein Abschaltsignal zum Abschalten des Antriebsmotors 16 an die Steuerung 25.

In der vorliegenden Ausführungsform steuert die Steuerung 25 den Antriebsmotor 16 zu einer zur Gebrauchsstellung 19 der Zugpartie 17 gerichteten Bewegungsrichtung sowohl zyklisch wiederkehrend an, z.B. in einem in der Steuerung 25 konfigurierten Zeitraster, solange die Erfassungsmittel 12 eine Nutzung des Versorgerkontakts 15 melden, als auch bereits bei einer erstmaligen Nutzung des Versorgerkontakts 15, z.B. beim Einstecken des Steckers 43 in den Versorgerkontakt 15.

Varianten der Erfindung sind ohne Weiteres möglich:

Beispielsweise können die Prüfströme IP1, IP2, IP3 Gleichströme oder gepulste Ströme sein, die in einer vorbestimmten Pulsfrequenz über die zugfahrzeugseitigen und/oder anhängerseitigen Verbraucher und/oder diesen zugeordnete Überbrückungsmittel fließen.

Statt des Sensors 34 könnte auch beispielsweise eine Drehmomenterfassung für den Antriebsmotor 16 vorgesehen sein, die der Steuerung 25 das Erreichen eines z.B. bei Anliegen der Zugpartie 17 am Anschlag 24 oder an einem sonstigen Hindernis auftretenden Grenzdrehmoments signalisiert, bei dem der Antriebsmotor 16 abgeschaltet werden soll. Eine Drehmomenterfassung ist beispielsweise durch Messen des den Antriebsmotor 16 durchfließenden Motorstromes möglich.

Vorliegend ist der Versorgerkontakt 15 als eine von der Zugpartie 17 separate Steckbuchse ausgeführt. Prinzipiell könnte auch die Zugpartie 17 bei entsprechender Ausstattung mit elektrischen Kontakten einen Versorgerkontakt zur Versorgung des Anhängers 13 bilden. Im einfachsten Fall könnte die Zugpartie 17 beispielsweise einen Massekontakt bilden.

Statt der Schutzklappe 45 könnte auch eine sonstige, den Sensor 40 betätigende Abdeckeinrichtung vorgesehen sein, beispielsweise ein Blindstecker oder dergleichen.

Der Versorgerkontakt 15 könnte auch eine elektrische Schnittstelle für eine zum Anhänger 13 führende Busleitung, z.B. eine CAN-Busleitung, bilden. Im Anhänger 13 wäre dann z.B. ein digitales Bus-Steuermodul zum Steuern der Leuchtmittel 36, 37, 38 oder sonstiger anhängerseitiger elektrischer Verbraucher angeordnet. Die Erfassungsmittel 12 könnten dann beispielsweise vom anhängerseitigen Bus-Steuermodul gesendete Nachrichten als eine Nutzung der Anhängerkupplung 10 durch den Anhänger 13 interpretieren und an die Sperrmittel 11 melden.

## Patentansprüche (Patentansprüche für folgende(n) Vertragsstaat(en): CH, CY, DK, ES, FI, GR, IE, IT, LU, MC, PT, SE, TR, LI)

1. Anhängerkupplung mit einer Zugpartie (17) zum Ankuppeln eines Anhängers (13) an ein Zugfahrzeug (9) und mit mindestens einem Antriebsmotor (16) zum Bewegen der Zugpartie (17) zwischen einer Ruhestellung (18) und einer Gebrauchsstellung (19), **dadurch gekennzeichnet, dass** sie Erfassungsmittel (12) zur Erfassung, ob mindestens ein der Anhängerkupplung zugeordneter elektrischer Versorgerkontakt (15) durch den Anhänger (13) genutzt wird, aufweist und dass sie Sperrmittel (11) enthält, mit denen eine Ansteuerung des mindestens einen Antriebsmotors (16) zu einer Bewegung der Zugpartie (17) in Richtung der Ruhestellung (18) verhinderbar ist, wenn die Erfassungsmittel (12) eine Nutzung des mindestens einen elektrischen Versorgerkontakts (15) durch den Anhänger (13) melden.

2. Anhängerkupplung nach Anspruch 1, **dadurch gekennzeichnet, dass** die Erfassungsmittel (12) zum Erfassen zumindest eines Zustandes mindestens eines durch den Versorgerkontakt (15) beeinflussten Stromkreises (58) ausgestaltet sind.

3. Anhängerkupplung nach Anspruch 2, **dadurch gekennzeichnet, dass** die Erfassungsmittel (12) zum Erfassen eines Schließens und/oder eines Öffnens des mindestens einen Stromkreises (58) ausgestaltet sind, wobei das Schließen und/oder das Öffnen insbesondere durch eine Betätigung des mindestens einen Versorgerkontakts (15) erfolgt.

4. Anhängerkupplung nach Anspruch 2 oder 3, **dadurch gekennzeichnet, dass** die Erfassungsmittel (12) zum Erfassen eines durch die Nutzung der Versorgerkontakts (15) bewirkten Hinzuschaltens und/oder Abschaltens mindestens eines elektrischen Verbrauchers (55; 36, 37, 38) ausgestaltet sind.

5. Anhängerkupplung nach Anspruch 4, **dadurch gekennzeichnet, dass** der mindestens eine elektrische Verbraucher (55; 36, 37, 38) ein Leuchtmittel des Anhängers (13) und/oder des Zugfahrzeugs (9), insbesondere eine Nebelschlussleuchte des Zugfahrzeugs (9), umfasst.

6. Anhängerkupplung nach Anspruch 4 oder 5, **dadurch gekennzeichnet, dass** dem mindestens einen elektrischen Verbraucher (55; 36, 37, 38) und/oder einem diesem zugeordneten Schaltmittel (56; 75, 76) Überbrückungsmittel (60, 62; 75, 76, 78) zugeordnet sind, so dass das Erfassen eines durch die Nutzung der Versorgerkontakts (15) bewirkten Hinzuschaltens und/oder Abschaltens mindestens eines elektrischen Verbrauchers (55; 36, 37, 38) auch dann möglich ist, wenn dieser gestört ist und/oder die jeweils zugeordneten Schaltmittel (56; 75, 76) elektrisch isolieren.

7. Anhängerkupplung nach einem der Ansprüche 2 bis 6, **dadurch gekennzeichnet, dass** die Erfassungsmittel (12) Einspeisemittel zum Einspeisen eines Prüfstromes (IP1, IP2, IP3) in den mindestens einen durch den Versorgerkontakt (15) beeinflussten Stromkreise (58) des Zugfahrzeuges (9) und/oder des Anhängers (13) aufweisen.

8. Anhängerkupplung nach einem der vorhergehenden Ansprüche, **dadurch gekennzeichnet, dass** die Erfassungsmittel (12) eine an dem Versorgerkontakt (15) angeordnete Sensoranordnung (39, 40) und/oder Schalteranordnung enthalten.

9. Anhängerkupplung nach Anspruch 8, **dadurch gekennzeichnet, dass** die Sensoranordnung (39, 40) und/oder die Schalteranordnung zu einem elektro-mechanischen und/oder optischen und/oder kapazitiven und/oder induktiven Erfassen eines mit dem Versorgerkontakt (15) verbundenen anhängerseitigen Kontaktmittels (43), insbesondere eines Anhänger-Steckers, und/oder einer Stellung einer Abdeckeinrichtung (45), insbesondere einer Schutzklappe, für den mindestens einen elektrischen Versorgerkontakt (15) ausgestaltet sind.

10. Anhängerkupplung nach Anspruch 9, **dadurch gekennzeichnet, dass** sie zumindest einen durch die Abdeckeinrichtung (45) und/oder durch das Anhänger-Kontaktmittel, insbesondere dessen Gehäuse, betätigbaren elektro-mechanischen Schalter und/oder induktiven Sensor und/oder kapazitiven Sensor und/oder Reedkontakt und/oder eine derart betätigbare Lichtschranke aufweist.

11. Anhängerkupplung nach einem der vorhergehenden Ansprüche, **dadurch gekennzeichnet, dass** sie Steuermittel (25) zu einer Ansteuerung des mindestens einen Antriebsmotors (16) zu einer Bewegung der Zugpartie (17) in Richtung der Gebrauchsstellung (19) aufweist, wenn die Erfassungsmittel (12) eine Nutzung des elektrischen Versorgerkontakts (15) durch den Anhänger (13) melden.

12. Anhängerkupplung nach Anspruch 11, **dadurch gekennzeichnet, dass** die Steuermittel (25) zu einem zyklischen Einschalten des mindestens einen Antriebsmotors (16) zu einer zur Gebrauchsstellung (19) der Zugpartie (17) gerichteten Bewegungsrichtung ausgestaltet sind.

13. Anhängerkupplung (13) nach Anspruch 11 oder 12, **dadurch gekennzeichnet, dass** die Steuermittel (25) zur Ansteuerung des mindestens einen Antriebsmotors (16) in einer zur Gebrauchsstellung (19) der Zugpartie (17) gerichteten Bewegungsrichtung ausgestaltet sind, wenn die Erfassungsmittel (12) eine erstmalige Nutzung des mindestens einen elektrischen Versorgerkontakts (15) durch den Anhänger melden.

14. Anhängerkupplung nach einem der vorhergehenden Ansprüche, **dadurch gekennzeichnet, dass** zwischen dem mindestens einen Antriebsmotor (16) und der Zugpartie (17) Blockiermittel (23), insbesondere ein selbsthemmendes Getriebe, zum Verhindern einer Bewegung der Zugpartie (17) in Richtung der Ruhestellung (18) bei nicht aktiviertem Antriebsmotor (16) angeordnet sind.

## Patentansprüche (Patentansprüche für folgende(n) Vertragsstaat(en): AT, BE, ,DE, FR, GB, NL)

1. Anhängerkupplung mit einer Zugpartie (17) zum Ankuppeln eines Anhängers (13) an ein Zugfahrzeug (9) und mit mindestens einem Antriebsmotor (16) zum Bewegen der Zugpartie (17) zwischen einer Ruhestellung (18) und einer Gebrauchsstellung (19), wobei die Anhängerkupplung Erfassungsmittel (12) zur Erfassung, ob mindestens ein der Anhängerkupplung zugeordneter elektrischer Versorgerkontakt (15) durch den Anhänger (13) genutzt wird, aufweist und wobei die Anhängerkupplung Sperrmittel (11) enthält, mit denen eine Ansteuerung des mindestens einen Antriebsmotors (16) zu einer Bewegung der Zugpartie (17) in Richtung der Ruhestellung (18) verhinderbar ist, wenn die Erfassungsmittel (12) eine Nutzung des mindestens einen elektrischen Versorgerkontakts (15) durch den Anhänger (13) melden, wobei die Anhängerkupplung Steuermittel (25) zu einer Ansteuerung des mindestens einen Antriebsmotors (16) zu einer Bewegung der Zugpartie (17) in Richtung der Gebrauchsstellung (19) aufweist, wenn die Erfassungsmittel (12) eine Nutzung des elektrischen Versorgerkontakts (15) durch den Anhänger (13) melden.

2. Anhängerkupplung nach Anspruch 1, **dadurch gekennzeichnet, dass** die Erfassungsmittel (12) zum Erfassen zumindest eines Zustandes mindestens eines durch den Versorgerkontakt (15) beeinflussten Stromkreises (58) ausgestaltet sind.

3. Anhängerkupplung nach Anspruch 2, **dadurch gekennzeichnet, dass** die Erfassungsmittel (12) zum Erfassen eines Schließens und/oder eines Öffnens des mindestens einen Stromkreises (58) ausgestaltet sind, wobei das Schließen und/oder das Öffnen insbesondere durch eine Betätigung des mindestens einen Versorgerkontakts (15) erfolgt.

4. Anhängerkupplung nach Anspruch 2 oder 3, **dadurch gekennzeichnet, dass** die Erfassungsmittel (12) zum Erfassen eines durch die Nutzung der Versorgerkontakts (15) bewirkten Hinzuschaltens und/oder Abschaltens mindestens eines elektrischen Verbrauchers (55; 36, 37, 38) ausgestaltet sind.

5. Anhängerkupplung nach Anspruch 4, **dadurch gekennzeichnet, dass** der mindestens eine elektrische Verbraucher (55; 36, 37, 38) ein Leuchtmittel des Anhängers (13) und/oder des Zugfahrzeugs (9), insbesondere eine Nebelschlussleuchte des Zugfahrzeugs (9), umfasst.

6. Anhängerkupplung nach Anspruch 4 oder 5, **dadurch gekennzeichnet, dass** dem mindestens einen elektrischen Verbraucher (55; 36, 37, 38) und/oder einem diesem zugeordneten Schaltmittel (56; 75, 76) Überbrückungsmittel (60, 62; 75, 76, 78) zugeordnet sind, so dass das Erfassen eines durch die Nutzung der Versorgerkontakts (15) bewirkten Hinzuschaltens und/oder Abschaltens mindestens eines elektrischen Verbrauchers (55; 36, 37, 38) auch dann möglich ist, wenn dieser gestört ist und/oder die jeweils zugeordneten Schaltmittel (56; 75, 76) elektrisch isolieren.

7. Anhängerkupplung nach einem der Ansprüche 2 bis 6, **dadurch gekennzeichnet, dass** die Erfassungsmittel (12) Einspeisemittel zum Einspeisen eines Prüfstromes (IP1, IP2, IP3) in den mindestens einen durch den Versorgerkontakt (15) beeinflussten Stromkreise (58) des Zugfahrzeuges (9) und/oder des Anhängers (13) aufweisen.

8. Anhängerkupplung nach einem der vorhergehenden Ansprüche, **dadurch gekennzeichnet, dass** die Erfassungsmittel (12) eine an dem Versorgerkontakt (15) angeordnete Sensoranordnung (39, 40) und/oder Schalteranordnung enthalten.

9. Anhängerkupplung nach Anspruch 8, **dadurch gekennzeichnet, dass** die Sensoranordnung (39, 40) und/oder die Schalteranordnung zu einem elektro-mechanischen und/oder optischen und/oder kapazitiven und/oder induktiven Erfassen eines mit dem Versorgerkontakt (15) verbundenen anhängerseitigen Kontaktmittels (43), insbesondere eines Anhänger-Steckers, und/oder einer Stellung einer Abdeckeinrichtung (45), insbesondere einer Schutzklappe, für den mindestens einen elektrischen Versorgerkontakt (15) ausgestaltet sind.

10. Anhängerkupplung nach Anspruch 9, **dadurch gekennzeichnet, dass** sie zumindest einen durch die Abdeckeinrichtung (45) und/oder durch das Anhänger-Kontaktmittel, insbesondere dessen Gehäuse, betätigbaren elektro-mechanischen Schalter und/oder induktiven Sensor und/oder kapazitiven Sensor und/oder Reedkontakt und/oder eine derart betätigbare Lichtschranke aufweist.

11. Anhängerkupplung nach einem der vorhergehenden Ansprüche, **dadurch gekennzeichnet, dass** die Steuermittel (25) zu einem zyklischen Einschalten des mindestens einen Antriebsmotors (16) zu einer zur Gebrauchsstellung (19) der Zugpartie (17) gerichteten Bewegungsrichtung ausgestaltet sind.

12. Anhängerkupplung (13) nach einem der vorhergehenden Ansprüche, **dadurch gekennzeichnet, dass** die Steuermittel (25) zur Ansteuerung des mindestens einen Antriebsmotors (16) in einer zur Gebrauchsstellung (19) der Zugpartie (17) gerechteten Bewegungsrichtung ausgestaltet sind, wenn die Erfassungsmittel (12) eine erstmalige Nutzung des mindestens einen elektrischen Versorgerkontakts (15) durch den Anhänger melden.

13. Anhängerkupplung nach einem der vorhergehenden Ansprüche, **dadurch gekennzeichnet, dass** zwischen dem mindestens einen Antriebsmotor (16) und der Zugpartie (17) Blockiermittel (23), insbesondere ein selbsthemmendes Getriebe, zum Verhindern einer Bewegung der Zugpartie (17) in Richtung der Ruhestellung (18) bei nicht aktiviertem Antriebsmotor (16) angeordnet sind.

## Claims (Claims for the following Contracting State(s): CH, CY, DK, ES, FI, GR, IE, IT, LU, MC, PT, SE, TR, LI)

1. Trailer coupling with a towing section (17) for the coupling of a trailer (13) to a towing vehicle (9) and with one or more drive motors (16) to move the towing section (17) between a rest position (18) and a position of use (19), **characterised in that** it has detection means (12) to detect whether one or more electrical supply contacts (15) assigned to the trailer coupling is being used by the trailer (13), and that it contains locking means (11) which may be used to prevent driving of the drive motor or motors (16) to effect a movement of the towing section (17) towards the rest position (18), if the detection means (12) report use of one or more electrical supply contacts (15) by the trailer (13).

2. Trailer coupling according to claim 1, **characterised in that** the detection means (12) are designed to detect at least one condition of one or more electrical circuits (58) influenced by the supply contact (15).

3. Trailer coupling according to claim 2, **characterised in that** the detection means (12) are designed to detect closing and/or opening of the electrical circuit or circuits (58), wherein the closing and/or opening is effected in particular by actuation of the supply contact or contacts (15).

4. Trailer coupling according to claim 2 or 3, **characterised in that** the detection means (12) are designed to detect a connection and/or disconnection of one or more electrical loads (55; 36, 37, 38) caused by the use of the supply contact (15).

5. Trailer coupling according to claim 4, **characterised in that** the electrical load or loads (55; 36, 37, 38) comprises a lamp of the trailer (13) and/or the towing vehicle (9), in particular a rear fog lamp of the towing vehicle (9).

6. Trailer coupling according to claim 4 or 5, **characterised in that** the electrical load or loads (55; 36, 37, 38) and/or switching means (56; 75, 76) assigned to the latter are assigned bridging means (60, 62; 75, 76, 78), so that the detection of connection and/or disconnection of one or more electrical loads (55; 36, 37, 38) caused by the use of the supply contact (15) is also possible when the load is faulty and/or is electrically isolating the respectively assigned switching means (56; 75, 76).

7. Trailer coupling according to any of claims 2 to 6, **characterised in that** the detection means (12) have feed means to feed a test current (IP1, IP2, IP3) into the electrical circuit or circuits (58) of the towing vehicle (9) and/or the trailer (13) which are influenced by the supply contact (15).

8. Trailer coupling according to any of the preceding claims, **characterised in that** the detection means (12) contain a sensor array (39, 40) and/or a switch array located on the supply contact (15).

9. Trailer coupling according to claim 8, **characterised in that** the sensor array (39,40) and/or the switch array are designed for the electro-mechanical and/or optical and/or capacitive and/or inductive detection of trailer-side contact means (43) connected to the supply contact (15), in particular a trailer connector, and/or a position of a cover device (45), in particular a hinged flap, for the supply contact or contacts (15).

10. Trailer coupling according to claim 9, **characterised in that** it has at least one electro-mechanical switch and/or inductive sensor and/or capacitive sensor and/or reed contact and/or a light barrier capable of actuation by the cover device (45) and/or by the trailer contact means.

11. Trailer coupling according to any of the preceding claims, **characterised in that** it has control means (25) to drive the drive motor or motors (16) to move the towing section (17) towards the position of use (19) when the detection means (12) report a use of the supply contact (15) by the trailer (13).

12. Trailer coupling according to claim 11, **characterised in that** the control means (25) are designed for cyclical switching-on of the drive motor or motors (16) to a direction of movement directed towards the position of use (19) of the towing section (17).

13. Trailer coupling (13) according to claim 11 or 12, **characterised in that** control means (25) are designed to drive the drive motor or motors (16) to a direction of movement directed towards the position of use (19) of the towing section (17) when the detection means (12) report use by the trailer for the first time of the supply contact or contacts (15).

14. Trailer coupling according to any of the preceding claims, **characterised in that** there are provided, between the drive motor or motors (16) and the towing section (17), blocking means (23), in particular an irreversible gear, to prevent any movement of the towing section (17) in the direction of the rest position (18) when the drive motor (16) is not activated.

## Claims (Claims for the following Contracting State(s): AT, BE, DE, FR, GB, NL)

1. Trailer coupling with a towing section (17) for the coupling of a trailer (13) to a towing vehicle (9) and with one or more drive motors (16) to move the towing section (17) between a rest position (18) and a position of use (19), **characterised in that** it has detection means (12) to detect whether one or more electrical supply contacts (15) assigned to the trailer coupling is being used by the trailer (13), and that it contains locking means (11) which may be used to prevent driving of the drive motor or motors (16) to effect a movement of the towing section (17) towards the rest position (18), if the detection means (12) report use of one or more electrical supply contacts (15) by the trailer (13), wherein the trailer coupling has control means (25) to drive the drive motor or motors (16) to move the towing section (17) towards the position of use (19) when the detection means (12) report a use of the supply contact (15) by the trailer (13).

2. Trailer coupling according to claim 1, **characterised in that** the detection means (12) are designed to detect at least one condition of one or more electrical circuits (58) influenced by the supply contact (15).

3. Trailer coupling according to claim 2, **characterised in that** the detection means (12) are designed to detect closing and/or opening of the electrical circuit or circuits (58), wherein the closing and/or opening is effected in particular by actuation of the supply contact or contacts (15).

4. Trailer coupling according to claim 2 or 3, **characterised in that** the detection means (12) are designed to detect a connection and/or disconnection of one or more electrical loads (55; 36, 37, 38) caused by the use of the supply contact (15).

5. Trailer coupling according to claim 4, **characterised in that** the electrical load or loads (55; 36, 37, 38) comprises a lamp of the trailer (13) and/or the towing vehicle (9), in particular a rear fog lamp of the towing vehicle (9).

6. Trailer coupling according to claim 4 or 5, **characterised in that** the electrical load or loads (55; 36, 37, 38) and/or switching means (56; 75, 76) assigned to the latter are assigned bridging means (60, 62; 75, 76, 78), so that the detection pf connection and/or disconnection of one or more electrical loads (55; 36, 37, 38) caused by the use of the supply contact (15) is also possible when the load is faulty and/or is electrical isolating the respectively assigned switching means (56; 75, 76).

7. Trailer coupling according to any of claims 2 to 6, **characterised in that** the detection means (12) have fed means to feed a test current (IP1, IP2, IP3) into the electrical circuit or circuits (58) of the towing vehicle (9) and/or the trailer (13) which are influenced by the supply contact (15).

8. Trailer coupling according to any of the preceding claims, **characterised in that** the detection means (12) contain a sensor array (39, 40) and/or a switch array located on the supply contact (15).

9. Trailer coupling according to claim 8, **characterised in that** the sensor array (39, 40) and/or the switch array are designed for the electro-mechanical and/or optical and/or capacitive and/or inductive detection of trailer-side contact means (43) connected to the supply contact (15), in particular a trailer connector, and/or a position of a cover device (45), in particular a hinged flap, for the supply contact or contacts (15).

10. Trailer coupling according to claim 9, **characterised in that** it has at least one electro-mechanical switch and/or inductive sensor and/or capacitive sensor and/or reed contact and/or a light barrier capable of actuation by the cover device (45) and/or by the trailer contact means.

11. Trailer coupling according to claim 11, **characterised in that** the control means (25) are designed for cyclical switching-on of the drive motor or motors (16) to a direction of movement directed towards the position of use (19) of the towing section (17).

12. Trailer coupling (13) according to any of the preceding claims, **characterised in that** control means (25) are designed to drive the drive motor or motors (16) to a direction of movement directed towards the position of use (19) of the towing section (17) when the detection means (12) report use by the trailer for the first time of the supply contact or contacts (15).

13. Trailer coupling according to any of the preceding claims, **characterised in that** there are provided, between the drive motor or motors (16) and the towing section (17), blocking means (23), in particular an irreversible gear, to prevent any movement of the towing section (17) in the direction of the rest position (18) when the drive motor (16) is not activated.

## Revendications (Revendications pour l'(les) Etat(s) contractant(s) suivant(s): CH, CY, DK, ES, FI, GR, IE, IT, LU, MC, PT, SE, TR, LI)

1. Attelage de remorque avec une partie de traction (17) pour accrocher une remorque (13) à un véhicule tracteur (9) et avec au moins un moteur d'entraînement (16) pour déplacer la partie de traction (17) entre une position de repos (18) et une position de service (19), **caractérisé en ce qu'**il présente des moyens de détection (12) pour détecter si au moins un contact d'alimentation électrique (15) associé à l'attelage de remorque est utilisé par la remorque (13), et **en ce qu'**il comprend des moyens de blocage (11) avec lesquels une commande du moteur d'entraînement (16) au nombre d'au moins un en vue d'un mouvement de la partie de traction (17) en direction de la position de repos (18) peut être empêchée quand les moyens de détection (12) signalent une utilisation par la remorque (13) du contact d'alimentation électrique (15) au nombre d'au moins un.

2. Attelage de remorque selon la revendication 1, **caractérisé en ce que** les moyens de détection (12) sont configurés pour détecter au moins un état d'au moins un circuit électrique (58) influencé par le contact d'alimentation (15).

3. Attelage de remorque selon la revendication 2, **caractérisé en ce que** les moyens de détection (12) sont configurés pour détecter une fermeture et/ou une ouverture du circuit électrique (58) au nombre d'au moins un, la fermeture et/ou l'ouverture s'effectuant en particulier par un actionnement du contact d'alimentation (15) au nombre d'au moins un.

4. Attelage de remorque selon la revendication 2 ou 3, **caractérisé en ce que** les moyens de détection (12) sont configurés pour détecter une mise en marche ou une mise à l'arrêt d'au moins un consommateur électrique (55 ; 36, 37, 38) provoquée par l'utilisation du contact d'alimentation (15).

5. Attelage de remorque selon la revendication 4, **caractérisé en ce que** le consommateur électrique (55 ; 36, 37, 38) au nombre d'au moins un comprend un moyen d'éclairage de la remorque (13) et/ou du véhicule tracteur (9), en particulier un phare anti-brouillard arrière du véhicule tracteur (9).

6. Attelage de remorque selon la revendication 4 ou 5, **caractérisé en ce qu'**au consommateur électrique (55 ; 36, 37, 38) au nombre d'au moins un et/ou à un moyen de commutation (56 ; 75, 76), qui lui est associé, sont associés des moyens de court-circuitage (60, 62 ; 75, 76, 78), de sorte que la détection d'une mise en marche ou d'une mise à l'arrêt d'au moins un consommateur électrique (55 ; 36, 37, 38) provoquée par l'utilisation du contact d'alimentation (15) est encore possible lorsque celui-ci est en panne et/ou lorsque les moyens de commutation (56 ; 75, 76) respectivement associés isolent électriquement.

7. Attelage de remorque selon l'une des revendications 2 à 6, **caractérisé en ce que** les moyens de détection (12) présentent des moyens d'alimentation pour injecter un courant de contrôle (IP1, IP2, IP3) dans le circuit électrique (58) au nombre d'au moins un du véhicule tracteur (9) et/ou de la remorque (13) influencé par le contact d'alimentation (15).

8. Attelage de remorque selon l'une des revendications précédentes, **caractérisé en ce que** les moyens de détection (12) contiennent un système de capteur (39, 40) et/ou un système de commutateur placé sur le contact d'alimentation (15).

9. Attelage de remorque selon la revendication 8, **caractérisé en ce que** le système de capteur (39, 40) et/ou le système de commutateur sont configurés en vue de la détection électromécanique et/ou optique et/ou capacitive et/ou inductive d'un moyen de contact (43) côté remorque relié au contact d'alimentation (15), en particulier d'une prise de remorque, et/ou d'une position d'un dispositif de fermeture (45), en particulier d'une trappe de fermeture pour le contact d'alimentation (15) au nombre d'au moins un.

10. Attelage de remorque selon la revendication 9, **caractérisé en ce qu'**il présente au moins un commutateur électromécanique et/ou capteur inductif et/ou capteur capacitif et/ou contact à lame vibrante actionnable par le dispositif de fermeture (45) et/ou par le moyen de contact de remorque, en particulier par son boîtier, et/ou une barrière lumineuse actionnable de la sorte.

11. Attelage de remorque selon l'une des revendications précédentes, **caractérisé en ce qu'**il présente des moyens de commande (25) en vue de commander le moteur d'entraînement (16) au nombre d'au moins un pour un mouvement de la partie de traction (17) en direction de la position de service (19) quand les moyens de détection (12) signalent une utilisation du contact d'alimentation électrique (15) par la remorque (13).

12. Attelage de remorque selon la revendication 11, **caractérisé en ce que** les moyens de commande (25) sont configurés pour une mise en marche cyclique du moteur d'entraînement (16) au nombre d'au moins un pour un mouvement dirigé vers la position de service (19) de la partie de traction (17).

13. Attelage de remorque selon la revendication 11 ou 12, **caractérisé en ce que** les moyens de commande (25) sont configurés pour commander le moteur d'entraînement (16) au nombre d'au moins un pour un mouvement de la partie de traction (17) en direction de la position de service (19) quand les moyens de détection (12) signalent une première utilisation du contact d'alimentation électrique (15) au nombre d'au moins un par la remorque (13).

14. Attelage de remorque selon l'une des revendications précédentes, **caractérisé en ce qu'**entre le moteur d'entraînement (16) au nombre d'au moins un et la partie de traction (17), il est prévu des moyens de blocage (23), en particulier un engrenage autobloquant, pour empêcher un mouvement de la partie de traction (17) en direction de la position de repos (18) si le moteur d'entraînement (16) n'est pas activé.

## Revendications (Revendications pour l'(les) Etat(s) contractant(s) suivant(s): AT, BE, DE, FR, GB, NL)

1. Attelage de remorque avec une partie de traction (17) pour accrocher une remorque (13) à un véhicule tracteur (9) et avec au moins un moteur d'entraînement (16) pour déplacer la partie de traction (17) entre une position de repos (18) et une position de service (19), l'attelage de remorque présentant des moyens de détection (12) pour détecter si au moins un contact d'alimentation électrique (15) associé à l'attelage de remorque est utilisé par la remorque (13), et l'attelage de remorque comprenant des moyens de blocage (11) avec lesquels une commande du moteur d'entraînement (16) au nombre d'au moins un en vue d'un mouvement de la partie de traction (17) en direction de la position de repos (18) peut être empêchée quand les moyens de détection (12) signalent une utilisation par la remorque (13) du contact d'alimentation électrique (15) au nombre d'au moins un, l'attelage de remorque présentant des moyens de commande (25) pour commander le moteur d'entraînement (16) au nombre d'au moins un en vue d'un mouvement de la partie de traction (17) en direction de la position de service (19) quand les moyens de détection (12) signalent une utilisation du contact d'alimentation électrique (15) par la remorque (13).

2. Attelage de remorque selon la revendication 1, **caractérisé en ce que** les moyens de détection (12) sont configurés pour détecter au moins un état d'au moins un circuit électrique (58) influencé par le contact d'alimentation (15).

3. Attelage de remorque selon la revendication 2, **caractérisé en ce que** les moyens de détection (12) sont configurés pour détecter une fermeture et/ou une ouverture du circuit électrique (58) au nombre d'au moins un, la fermeture et/ou l'ouverture s'effectuant en particulier par un actionnement du contact d'alimentation (15) au nombre d'au moins un.

4. Attelage de remorque selon la revendication 2 ou 3, **caractérisé en ce que** les moyens de détection (12) sont configurés pour détecter une mise en marche ou une mise à l'arrêt d'au moins un consommateur électrique (55 ; 36, 37, 38) provoquée par l'utilisation du contact d'alimentation (15).

5. Attelage de remorque selon la revendication 4, **caractérisé en ce que** le consommateur électrique (55 ; 36, 37, 38) au nombre d'au moins un comprend un moyen d'éclairage de la remorque (13) et/ou du véhicule tracteur (9), en particulier un phare anti-brouillard arrière du véhicule tracteur (9).

6. Attelage de remorque selon la revendication 4 ou 5, **caractérisé en ce qu'**au consommateur électrique (55 ; 36, 37, 38) au nombre d'au moins un et/ou à un moyen de commutation (56 ; 75, 76), qui lui est associé, sont associés des moyens de court-circuitage (60, 62 ; 75, 76, 78), de sorte que la détection d'une mise en marche ou d'une mise à l'arrêt d'au moins un consommateur électrique (55 ; 36, 37, 38) provoquée par l'utilisation du contact d'alimentation (15) est encore possible lorsque celui-ci est en panne et/ou lorsque les moyens de commutation (56 ; 75, 76) respectivement associés isolent électriquement.

7. Attelage de remorque selon l'une des revendications 2 à 6, **caractérisé en ce que** les moyens de détection (12) présentent des moyens d'alimentation pour injecter un courant de contrôle (IP1, IP2, IP3) dans le circuit électrique (58) au nombre d'au moins un du véhicule tracteur (9) et/ou de la remorque (13) influencé par le contact d'alimentation (15).

8. Attelage de remorque selon l'une des revendications précédentes, **caractérisé en ce que** les moyens de détection (12) contiennent un système de capteur (39, 40) et/ou un système de commutateur placé sur le contact d'alimentation (15).

9. Attelage de remorque selon la revendication 8, **caractérisé en ce que** le système de capteur (39, 40) et/ou le système de commutateur sont configurés en vue de la détection électromécanique et/ou optique et/ou capacitive et/ou inductive d'un moyen de contact (43) côté remorque relié au contact d'alimentation (15), en particulier d'une prise de remorque, et/ou d'une position d'un dispositif de fermeture (45), en particulier d'une trappe de fermeture pour le contact d'alimentation (15) au nombre d'au moins un.

10. Attelage de remorque selon la revendication 9, **caractérisé en ce qu'**il présente au moins un commutateur électromécanique et/ou capteur inductif et/ou capteur capacitif et/ou contact à lame vibrante actionnable par le dispositif de fermeture (45) et/ou par le moyen de contact de remorque, en particulier par son boîtier, et/ou une barrière lumineuse actionnable de la sorte.

11. Attelage de remorque selon l'une des revendications précédentes, **caractérisé en ce que** les moyens de commande (25) sont configurés pour une mise en marche cyclique du moteur d'entraînement (16) au nombre d'au moins un pour un mouvement dirigé vers la position de service (19) de la partie de traction (17).

12. Attelage de remorque (13) selon l'une des revendications précédentes, **caractérisé en ce que** les moyens de commande (25) sont configurés pour commander le moteur d'entraînement (16) au nombre d'au moins un pour un mouvement de la partie de traction (17) en direction de la position de service (19) quand les moyens de détection (12) signalent une première utilisation du contact d'alimentation électrique (15) au nombre d'au moins un par la remorque (13).

13. Attelage de remorque selon l'une des revendications précédentes, **caractérisé en ce qu'**entre le moteur d'entraînement (16) au nombre d'au moins un et la partie de traction (17), il est prévu des moyens de blocage (23), en particulier un engrenage autobloquant, pour empêcher un mouvement de la partie de traction (17) en direction de la position de repos (18) si le moteur d'entraînement (16) n'est pas activé.
